# EUROPEAN PATENT APPLICATION

(11) **EP 1 707 334 A1**
(43) Date of publication of application: **04.10.2006**
(21) Application number: 05703828.3
(22) Date of filing: 19.01.2005
(51) Int. Cl.: B29B 17/02, G11B 7/26, G11B 25/04

(54) **METHOD FOR RECYCLING OPTICAL DISC, RESIN MOLDED ARTICLE, AND RECYCLED OPTICAL DISC**

(30) Priority: 21.01.2004 JP 2004013601
(71) Applicant: Orient Instrument Computer Co., Ltd, Osaka-shi, Osaka 536-0014 (JP)
(72) Inventor: ITO, Tomoaki, ORIENT INSTRUMENT COMPUTER CO., LTD., Osaka-shi, Osaka 536-0014 (JP)
(74) Representative: Paul, Dieter-Alfred
(86) International application number: PCT/JP2005/000591
(87) International publication number: WO 2005/070640

(57) **Abstract**

To recover resin used in an optical disk 10 in high purity and with ease in recycling an optical disk.
A method for recycling an optical disk of the present invention includes an abrading step and a peripheral face removing step. The abrading step abrades a recording surface 31, opposite to a reading surface 30
where a substrate 11 of the optical disk 10 is exposed, until the substrate becomes exposed. Further, the peripheral face removing step removes portions adjacent to an outer peripheral face 32 and an inner peripheral face 33.

## Description

### BACKGROUND OF THE INVENTION

### TECHNICAL FIELD

The present invention relates to a method for recycling an optical disk by using a disused optical disk, an optical information recording medium such as a CD, a CD-R, a CD-RW, a DVD, or a DVD-R.

### BACKGROUND ART

Conventionally, optical disks such as a CD, a CD-R, a CD-RW, a DVD, and a DVD-R are used as information recording media. These optical disks each include a substrate made of transparent resin such as polycarbonate and a reflecting part formed by a material such as a vapor-deposited aluminum film. For example, recorded information can be read by detecting, using a laser beam or the like, variation in light reflectance varied to record information by forming geometric irregularities on the substrate itself or varying dye, which is arranged between the substrate and the reflecting part.

Since record-reading is performed from a reading surface where the substrate is exposed, the substrate employs resin such as polycarbonate with high laser transparency, thereby enabling accurate reading of records.

There are many different types of such optical disks. Specific examples include one in which information is recorded by forming geometric irregularities in production of an optical disk and cannot be rewritten afterward, one in which information is recorded by varying a light reflectance after production of an optical disk, or one in which information is recorded once by varying a light reflectance after production of an optical disk and new information is rewritten in the same area.

An optical disk is further provided with a protection layer for protecting a reflecting layer and a printed layer for indicating contents of the disk.

Among these optical disks, one that cannot be repeatedly recorded and falls into disuse, one that can be repeatedly recorded and erased but made unusable due to deterioration or the like, or one that has disused data is discarded.

A method for recycling such an optical disk is disclosed in the patent document 1. The method for recycling an optical disk described in the patent document is performed by dissolving dye in solvent.

The patent document 1: JP 10-249103A

### PROBLEMS TO BE SOLVED BY THE INVENTION

Recently, prices of such optical disks are decreasing, resulting in increased number of used disks, but losses at the point of production or discarded optical disks are also increased along with this situation, causing environmental issues in disposal of these optical disks.

A substrate of an optical disk is thicker than other layers and made of resin, so as to be reusable only if the substrate can be separated from the other layers.

However, an optical disk includes a reflecting layer, a protection layer, and a printed layer besides the substrate. If and when the disk is just broken into fragments for recycle, components of the other layers may be finely dispersed in the resin, causing difficulty in separation and purification afterwards, or failing a complete separation even if separation and purification can be done.

There is also a problem in separating the substrate from the other parts by chemical treatment. Specifically, chemicals for such separation have safety issues and might involve workers in risk in working. Further, insufficient dissolution by chemicals is likely to result in insufficient separation, and variation in process conditions results in unstable quality of a reprocessed material. Still further, chemicals may be mixed into an ultimate material or deteriorate a material, resulting in lowering property of a recycled material compared with a new material.

Property of a recycled product, especially optical characteristic such as transparency, may be lowered due to the reasons as described above. Thus, the recycled product has not been used again as a material for a substrate of an optical disk.

A protection layer and a printed layer are disposed at a surface opposite to a reading surface, and more specifically, formed by application of an agent such as a liquid chemical on a recording surface opposite to the reading surface of a substrate and hardening by a reaction generated by irradiation with ultraviolet or the like. Therefore, the hardened chemical is attached to not only the recording surface but also edges (i.e., peripheral faces) of inside and outside of the substrate having a disc shape.

Thus, the reflecting layer, the protection layer, or the printed layer attached to the edges of the disc cannot be removed and remains by only removal of the recording surface opposite to the reading surface of the substrate.

Further, as a reflecting layer, a protection layer, and a printed layer are laminated on a surface (recording surface) opposite to a reading surface of a substrate, if the recording surface of the substrate has a groove, a layer such as the protection layer penetrates into the groove. Such a groove of a substrate is essential for molding of the substrate.

Thus, in order to remove by abrasion a layer such as a protection layer sticking into a groove of a substrate, it is necessary to abrade until the groove is worn out, requiring increased thickness to be abraded. In this case, it is not efficient because a material to be recycled is decreased and it takes time for an abrasive work.

It is therefore an object of the present invention to provide an improved method for recycling an optical disk capable of reusing resin of disused optical disk with reduced impurities.

### SUMMARY OF THE INVENTION

One of aspects of the present invention to solve the problem described above is therefore to provide a method for recycling an optical disk having a first surface, a second surface opposite to the first surface, and peripheral faces, the disk incorporating a substrate made of a resin, the substrate having its surfaces, one of the surfaces of the substrate being exposed at the first surface of the disk, a part of the substrate being picked as a reprocessed material by the method, the method comprising the steps of an abrading step where the second surface of the disk is abraded until the substrate becomes exposed and a peripheral face removing step where at least one peripheral face of the optical disk is removed around the face over a predetermined distance (depth).

The present aspect includes the peripheral face removing step where at least one peripheral face of the optical disk is removed around the face over a predetermined distance (depth), thereby ensuring removal of resin such as the protection layer adhered to the peripheral surface to improve the purity of a material to be recycled.

Further, the optical disk to be recycled has a groove on the second surface in which a material other than the resin has stuck, and the peripheral face removing step removes the groove and the material other than the resin.

Such a method removes the material other than the resin stuck in the groove in the peripheral face removing step even though the optical disk has the groove on the substrate, thereby improving the purity of a material to be recycled.

The peripheral face removing step may be adapted to punch out at least one of the peripheral faces of the disk in such a manner as splitting the peripheral face along a position at a predetermined distance from the peripheral face.

Such a method facilitates performance of the peripheral face removing step.

The peripheral face removing step may be adapted to cut out at least one of the peripheral faces of the disk in such a manner as splitting the peripheral face along a position at a predetermined distance from the peripheral face.

Further, the peripheral face removing step may be performed by abrading by which at least one of the peripheral faces of the disk is abraded over a predetermined distance (depth) from the peripheral face.

A resin molding may be molded into a predetermined shape by using a reprocessed material obtained by the method for recycling of an optical disk described above, and further, the reprocessed material may be used as a substrate of an optical disk.

### ADVANTAGEOUS EFFECT OF THE INVENTION

The method for recycling an optical disk in the present invention reuses resin of disused optical disks with reduced impurities.

### BRIEF DESCRIPTION OF THE DRAWINGS

Fig. 1A is a sectional perspective view of an optical disk for use in a method for recycling of the present invention;
Fig. 1B is an enlarged sectional view of A of Fig. 1A;
Fig. 2 is a front view of a device for use in an abrading step;
Fig. 3A is a front view of a press for use in a peripheral face removing step;
Fig. 3B is a sectional view taken along line B-B of Fig. 3A; and
Fig. 4 is a perspective view showing another method of the peripheral face removing step.

### DESCRIPTION OF THE PREFERRED EMBODIMENTS

Now, a preferred embodiment of the present invention will be described in detail below.

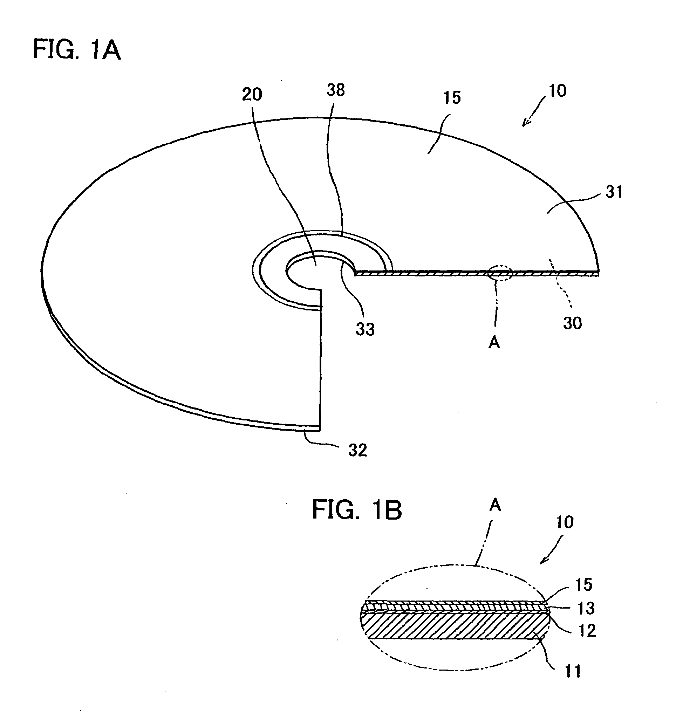

A method for recycling of an optical disk in the first embodiment of the present invention uses an optical disk 10 as shown in Fig. 1. The optical disk 10 is a CD (compact disk) that has been used and fallen into disuse.

Referring to Fig. 1A, the optical disk 10 has a disc shape having a through-hole 20, the through-hole 20 being of a circular shape in the center of the disk 10.

Further, the optical disk 10 has a circular outer peripheral face 32 at an outer periphery and a circular inner peripheral face 33 adjacent to the through-hole 20. The optical disk 10 has a first surface (upper side in Fig. 1A) as a reading surface 30, from which recorded information is read out by a laser beam.

As shown in Fig. 1B, an enlarged view of a section A of Fig. 1A, the optical disk 10 has a laminated structure with a substrate 11, a reflecting layer 12, a protection layer 13, and a printed part 15.

The substrate 11 is made of lucent resin, more specifically, polycarbonate. The substrate 11 is situated on the reading surface 30 of the disk. Fine geometric irregularities (not shown) are formed on a surface of the substrate 11 opposite to the reading surface 30. Information is recorded on the irregularities. These fine irregularities make variation of reflection of light, so that reading of the variation allows recorded information to be read. As shown in Fig. 1B, the substrate 11 is thicker than the any other layer.

Further, a groove 38 is formed on the surface of the substrate 11 opposite to the reading surface 30. The groove 38 is situated near the inner peripheral face 33 and formed when the substrate 11 is molded.

The reflecting layer 12 is a layer situated next to the substrate 11 and is in close contact with the irregularities. The reflecting layer 12 is made of metal such as aluminum with high laser reflectance, poor transparency of light, and poor absorption of light, and is formed by a method such as a vapor deposition. An irradiated laser beam is reflected by the reflecting layer 12, so that data of the optical disk 10 is read.

The protection layer 13 is made of a material such as ultraviolet-curable resin and protects the reflecting layer 12. The protection layer 13 is formed in such a manner as hardening a material such as liquid ultraviolet-curable resin applied to the reflecting layer 12 after the reflecting layer 12 is formed on the substrate 11. The protection layer 13 protects the reflecting layer 12 from dropping or being damaged. Because of such a method for formation, the resin of the protection layer 13 is stuck out on the outer peripheral face 32 and/or the inner peripheral face 33 of the optical disk 10.

The printed part 15 is disposed at a recording surface 31 (i.e., a second surface of the disk 10 opposite to the reading surface 30 where the substrate 11 is situated), and indicates contents of the optical disk 10 or the like. The printed part 15 is situated at the second surface opposite to the reading surface 30, so as not to interfere with reading of recorded information. Further, an inner edge (inner peripheral face) of the printed part 15 is situated outside of to the groove 38 of the substrate 11.

In the case of reading recorded information by using the optical disk 10, the disk 10 is used in such a manner that the information recorded on the substrate 11 of the disk 10 is read by using a laser beam.

In the case that this information has become unnecessary or the disk 10 has fallen into unusable due to a reason such as a scratch got on the reading surface 30, the reflecting layer 12, or the like, the optical disk 10 is recycled by a method for recycling the optical disk 10 as described below.

In this method for recycling, a portion except the substrate 11 is removed and only the substrate 11 is picked and broken into fragments, which are to be reused.

First, an abrading step is performed. The abrading step is a step of abrading the recording surface 31 of the optical disk 10 to be recycled. This step abrades a predetermined thickness of the recording surface 31 of the optical disk 10. The predetermined thickness of abrasion is such that the printed portion 15, the protection layer 13, and the reflecting layer 12 are abraded until the substrate 11 of the disk 10 becomes exposed at the recording surface 31.

After abrasion, the recording surface 31 of the disk 10 becomes made of resin of the protection layer 13 remaining in the groove 38 and polycarbonate resin at the other portion except the groove 38. Thus, an amount of abrasion in this case is less than that in the case of removal of the resin of the protection layer 13 remaining in the groove 38 by complete abrasion of the groove 38. The optical disk 10 after abrasion becomes made of the resin other than polycarbonate resin stuck into the groove 38 and on the outer and inner peripheral faces 32 and 33, and polycarbonate resin at the other portion.

This abrading step can be performed by any method just whereby abrasion is executed, and is performed by a method described below, for example.

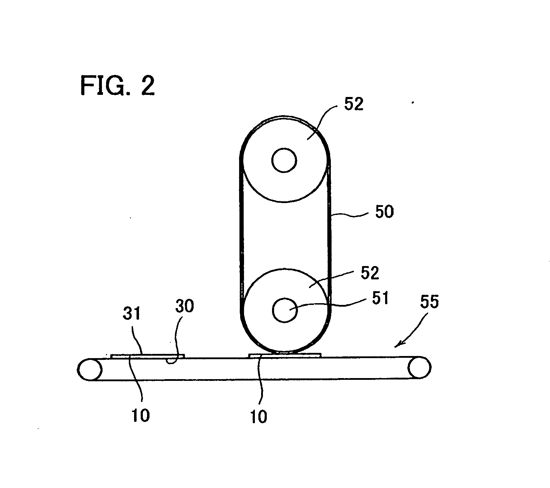

Specifically, as shown in Fig. 2, an abrasive cloth 50, which is a cloth with a granular abrasive agent attached thereto, is made looped and spanned over rotating bodies 52 each having a shaft 51, so that the rotating bodies 52 are arranged on the inner side of the abrasive cloth 50. Further, a movable table 55 adapted to bear optical disks 10 thereon is arranged below the abrasive cloth 50.

The rotational bodies 52 are rotated in a predetermined direction to drive the abrasive cloth 50. The optical disks 10 borne on the movable table 55 are conveyed in the predetermined direction, so that an upper side of each disk 10 is abraded when the disk 10 passes beneath the abrasive cloth 50.

Each of the disks 10 is placed on the movable table 55 such that the upper side becomes the recording surface 31.

A belt conveyor or the like is used as the movable table 55. Adjustment of a gap between the movable table 55 and the abrasive cloth 50 adjusts an amount of abrasion of the optical disk 10.

Further, since such abrasion generates heat, a spray of water to the recording surface 31 to be abraded protects the substrate 11 from fusion or deterioration.

Next, a peripheral face removing step for removing the outer and inner peripheral faces 32 and 33 is performed. This step is done for the case that the protection layer 13 stuck out on the outer and inner peripheral faces 32 and 33 of the optical disk 10 may remain, with the result that components of the protection layer 13 may get mixed into a reprocessed material as impurities if the disk 10 is broken into fragments with no other process, so as to remove the components.

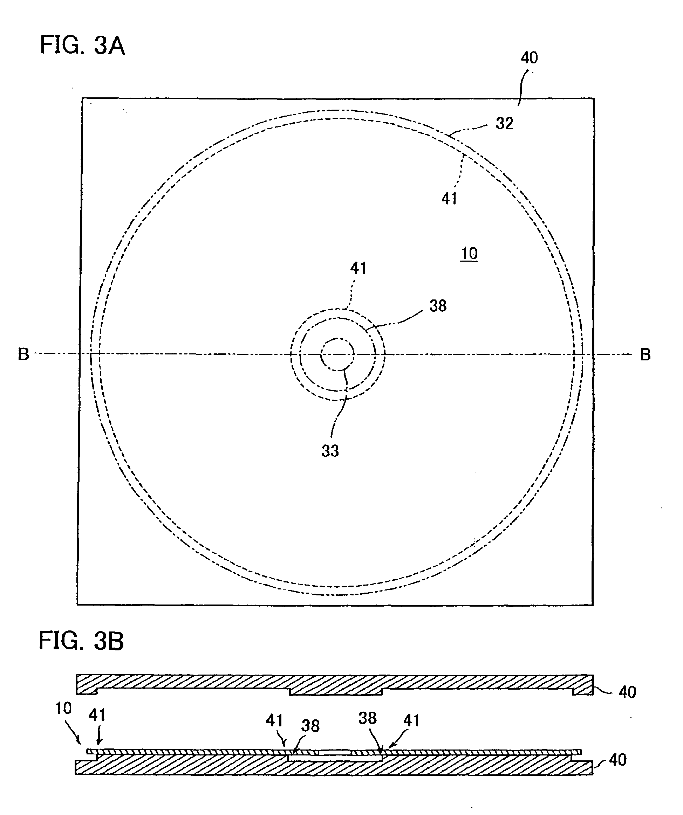

The removing step is performed by punching out cutting positions 41 by using a press 40 shown in Figs. 3A and 3B, for example, to apply shearing force to the cutting positions 41 near the outer and inner peripheral faces 32 and 33.

According to this step, resin of the protection layer 13 stuck out on the outer and inner peripheral faces 32 and 33 are removed. The positions 41 that are positions to be cut by applied shearing force are situated at the inner side for a predetermined distance from the outer peripheral face 32 and at the outer side for a predetermined distance from the inner peripheral face 33.

Herein, as the optical disk 10 for use in the present embodiment has the groove 38 formed on the substrate 11 adjacent to the recording surface 31, one of the cutting positions 41 is determined in such a manner that a portion including the groove 38 is removed. Specifically, as the groove 38 of the optical disk 10 is adjacent to the inner peripheral face 33, the cutting position 41 at the inner peripheral face 33 is located at the outer side of the groove 38. Consequently, after the removing step, the portion including the groove 38 is removed, so that the protection layer 13 stuck into the groove 38 never gets mixed into a reprocessed material.

In the removing step, it is possible to cut the outer and inner peripheral faces 32 and 33 of a plurality of the optical disks 10 in piles by the press 40. In this case, cutting works of a plurality of the optical disks 10 are simultaneously performed.

In this way, after the abrading step and the peripheral face removing step, the disk 10 becomes just made of a transparent resin material constituting the substrate 11, that is, polycarbonate resin. Thereafter, a washing step for removing abrasive powder adhered to the optical disk 10 and a breaking step of breaking the optical disk 10 into fragments follow. Then, the broken fragments alone or the broken fragments mixed with the same kind of a resin material are molded. The present embodiment recycles polycarbonate resin of thermoplastic resin, so that the resin is heated and fused to be molded.

Further, in order to make an optical disk 10 by using this resin, the reprocessed material is used to mold a substrate 11, and then a reflecting layer 12, a protection layer 13, and a printed portion 15 are formed. Herein, making of the optical disk 10 by using the reprocessed material is done in a manner similar to the method for making the optical disk 10 described above.

As a modified example, it is possible to provide a continuous performance of the abrading step and the peripheral face removing step with one device. In order to make this performance, the device is made so that the optical disk 10 is supplied from an exit of the movable table 55 for the abrading step in Fig. 2 to the removing step. Thereby, just the substrate 11 is picked by using this device.

Still further, a device having a structure with which the washing step or the breaking step is performed can be added to the device shown above can perform a series of steps.

Sequence of the abrading step and the peripheral face removing step is not limited in particular, and may be reversed from that in the embodiment described above to do first the removing step. The abrading step ahead of the removing step makes it easy to perform the removing step because the optical disk 10 is thin when the removing step is done.

The peripheral face removing step is performed by using the press 40, but may be performed by means other than the press 40.

The removing step can be performed, for example, by cutting out in such a manner as splitting the outer and inner peripheral faces each along the inner and outer side at a predetermined distance therefrom.

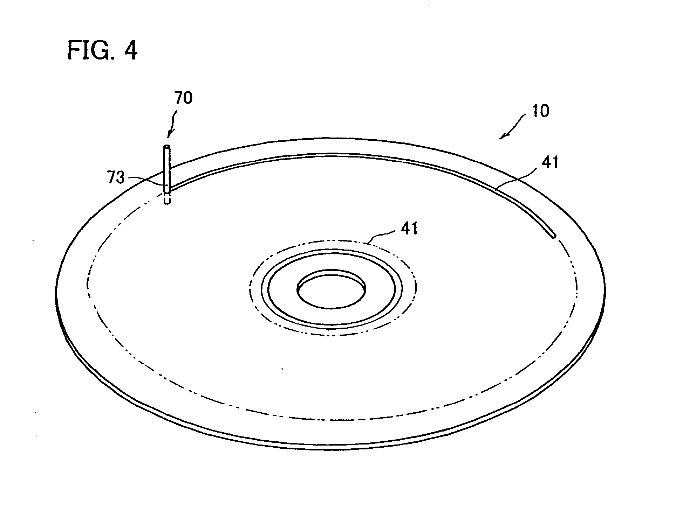

Referring to Fig. 4, an abrading rod 70, which is a rod-shaped body provided with an abrasive portion 73 therearound, is used. This abrading rod 70 is moved towards a desired place with rotating on its axis. The abrading rod 70 splits a necessary part from an unnecessary part of the substrate 11 by movement of the rod 70, thereby cutting out the unnecessary part, so as to complete the removing step. Specifically, the abrading rod 70 revolves (orbits) in the vicinities of the outer and inner peripheral faces 32 and 33 in such a manner as tracing the cutting positions 41 described above with the rod 70. In this case again, a plurality of the optical disks 10 are processed at one time.

Further, the peripheral face removing step can be performed by abrading by which the peripheral faces of the optical disk are abraded up to the outer or inner side at a predetermined distance therefrom. Specifically, the abrading rod 70 is moved in a direction vertical to the reading surface 30 and the recording surface 31 to abrade the outer and inner peripheral faces 32 and 33 up to a predetermined position.

Herein, an end mill may be employed as the abrading rod 70 used for cutting out and abrading described above.

The optical disk 10 used for the method for recycling an optical disk described above is a CD, but another optical disk 10 can be used for the method.

Further, resin that is a reprocessed material obtained by the method for recycling an optical disk of the present invention can be used again as a material for the substrate 11 as described above, or can be used to mold another article.

Still further, the substrate 11 of a disc shape with unnecessary resin removed by the abrading step and the peripheral face removing step can be used as an optical disk without any change.

## Claims

1. A method for recycling an optical disk having a first surface, a second surface opposite to the first surface, and peripheral faces, the disk incorporating a substrate made of a resin, the substrate having its surfaces, one of the surfaces of the substrate being exposed at the first surface of the disk, a part of the substrate being picked as a reprocessed material by the method, the method comprising the steps of:
an abrading step where the second surface of the disk is abraded until the substrate becomes exposed; and
a peripheral face removing step where at least one peripheral face of the optical disk is removed around the face over a predetermined distance.

2. The method as defined in claim 1,
the optical disk to be recycled having a groove on the second surface in which a material other than the resin has stuck, and
the peripheral face removing step removing the groove and the material other than the resin.

3. The method as defined in claim 1 or 2,
wherein the peripheral face removing step is adapted to punch out at least one of the peripheral faces of the disk in such a manner as splitting the peripheral face along a position at a predetermined distance from the peripheral face.

4. The method as defined in claim 1 or 2,
wherein the peripheral face removing step is adapted to cut out at least one of the peripheral faces of the disk in such a manner as splitting the peripheral face along a position at a predetermined distance from the peripheral face.

5. The method as defined in claim 1 or 2,
wherein the peripheral face removing step is performed by abrading by which at least one of the peripheral faces of the disk is abraded over a predetermined distance from the peripheral face.

6. A resin molding being molded into a predetermined shape by using a reprocessed material obtained by the method for recycling of an optical disk as defined in one of claims 1 to 5.

7. A recycled optical disk being manufactured by using a substrate molded by using a reprocessed material obtained by the method for recycling an optical disk as defmed in one of claims 1 to 5.
